(19) **Europäisches Patentamt / European Patent Office / Office européen des brevets**

(11) **EP 2 106 844 B1**

(12) **EUROPEAN PATENT SPECIFICATION**

(45) Date of publication and mention
of the grant of the patent:
**20.03.2013 Bulletin 2013/12**

(51) Int Cl.:
**B01D 67/00** (2006.01)  **B01J 19/00** (2006.01)
**B01D 71/34** (2006.01)  **B32B 3/00** (2006.01)

(21) Application number: **09156675.2**

(22) Date of filing: **30.03.2009**

(54) **Modified polyvinylidene fluoride membrane, laminated membrane for protein adsorption, and manufacturing methods thereof**

Modifizierte Polyvinyliden-Fluorid-Membran, laminierte Membran zur Proteinadsorption und Herstellungsverfahren dafür

Membrane de fluorure de polyvinyldène modifié, membrane stratifiée pour l'adsorption de protéines et leurs procédés de fabrication

(84) Designated Contracting States:
**CH DE FR GB LI**

(30) Priority: **02.04.2008 JP 2008096495**

(43) Date of publication of application:
**07.10.2009 Bulletin 2009/41**

(73) Proprietor: **Lintec Corporation**
**Tokyo 173-0001 (JP)**

(72) Inventor: **Miyazaki, Kentaro**
**Tokyo 173-0001 (JP)**

(74) Representative: **Cohausz & Florack**
**Patent- und Rechtsanwälte**
**Partnerschaftsgesellschaft**
**Bleichstraße 14**
**40211 Düsseldorf (DE)**

(56) References cited:
**EP-A- 1 772 735  WO-A-01/19505**
**US-A1- 2004 240 137**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a modified polyvinylidene fluoride membrane and a laminated membrane for adsorbing a protein, as well as manufacturing methods thereof.

BACKGROUND ART

In a protein chip, a plurality of a probe is arranged on a substrate of the protein chip in advance, and then the probe is specifically bound to a protein in a sample by bringing the sample into contact with the surface of the substrate. As a result, the function of the protein in the specimen can be analyzed (diagnosed). Proteins using DNA as a blueprint are responsible for an actual organic activity. Since functions of the proteins can be analyzed by the protein chip, it is expected that protein chips can be used as tools for a diagnostic method in fast and accurate medical treatments (tailor-made medical treatments) conforming to individuals.
In the protein chip, for example, a known protein is arranged as a probe on a surface substrate of the protein chip in advance, and then the protein chip catches a binding substance such as a protein (in a sample) specifically bound to the probe protein, whereby an analysis is carried out. The protein chip may also be referred to as a protein array. A large number of probes are arranged on the same substrate, and consequently a vast amount of information on the function of the protein can be obtained in parallel in a single test. Therefore, a considerable reduction of the time for diagnosis and savings in a sample volume can be expected. Since the protein chip requires a substrate which can be fixed a plurality of probes on the surface thereof, there is intense research being undertaken to develop suitable substrates to bind the probes to, and effective methods for binding the probes.
In order that a protein can be easily bound to the substrate, the following method has been examined: comprising using a glass slide and a micro plate of protein non-adsorptive substrate as the substrate of the protein chip by coating treatment of the surface of the substrate. As an example of such a method to bind a protein, the following method was proposed (Patent Reference 1): comprising being self-organized and grown compounds having SH groups such as alkanethiol on a substrate having a gold surface. However, the production process is too complicated, and the material cost is too expensive, to be practical.
On the other hand, the use of protein adsorptive materials, for example, membranes made of a polystyrene, a collages, fluorine-based resins, a cellulose or the like, as a substrate of a protein chip has been examined. However, as these membranes per se have a protein adsorptivity, the following problem occurs. That is, when a protein is applied to these membranes using a protein solution, the protein solution dropped to the membrane spreads on the membrane and, as a result, a certain amount of a protein can not be accurately adsorbed onto a certain area. Therefore, in order to adsorb many kinds or proteins on one membrane, it is necessary that areas onto which each protein is adsorbed are separated. However, there has not been simple and effective method for separating an area wherein each protein is adsorbed.
WO 01/19505 A2 describes a patterned porous structure with areas of porous material and areas of less porous or non porous material. The document further describes a method for forming such patterned porous structures.

SUMMARY OF THE INVENTION

TECHNICAL PROBLEM

It is known that a membrane for a protein chip is made by a method wherein a protein non-adsorptive membrane is fixed by adhesive or the like around a protein adsorptive membrane, in order to separate areas onto which proteins are adsorbed from each other. However, the fixing process of a protein non-adsorptive membrane is complicated. Further, an organic solvent can not be used when a protein is adsorbed, because an adhesive is used in the method.
Therefore, the object of the present invention is to provide a simple and effective method for separating areas onto which proteins are adsorbed from each other, and a protein adsorptive membrane useful as a substrate for a protein chip.

SOLUTION TO PROBLEM

With the aim of solving the aforementioned problems, the present inventors have conducted intensive studies on methods for separating areas onto which proteins are adsorbed from each other, in protein adsorptive materials used for a protein chip. As a result, the present inventors found that areas in which proteins are adsorbed can be simply and efficiently separated from each other, by modifying a membrane around a protein adsorptive area to be protein non-adsorptive and surrounding a circumference of a protein adsorptive area with a protein non-adsorptive area. Specifically, the present inventors found that a polyvinylidene fluoride membrane is a protein adsorptive membrane whose structure dramatically changes when subjected to a heat and pressure treatment, using the combination of a particular temperature and a particular pressure, and the polyvinylidene fluoride membrane becomes a protein non-adsorptive membrane. Furthermore, the present inventors also found that areas in which proteins are adsorbed can be simply and efficiently separated from each other, by laminating a protein adsorptive membrane and a protein non-adsorptive adsorptive membrane by heat sealing and surrounding the circumference of a protein adsorptive membrane with a protein non-adsorptive membrane.

The present invention is based on the above findings.

Therefore, the present invention relates to a method for manufacturing a modified polyvinylidene fluoride membrane comprising at least one modified area, characterized in that the modified area is obtained by subjecting a polyvinylidene fluoride membrane to a heat and pressure treatment under the condition satisfying the following equation $T \geq -0.015P+105$, wherein T is temperature ranging from 30°C to 170°C, P is pressure ranging from 1000 to 5000N/cm$^2$. According to a preferable embodiment of the method for manufacturing the modified polyvinylidene fluoride membrane of the present invention, the heat and pressure treatment is carried out using a metallic mold.

According to another preferable embodiment of the method for manufacturing the modified polyvinylidene fluoride membrane of the present invention, the polyvinylidene fluoride membrane has a protein binding capacity of not less than $0.1 \mu g/cm^2$.

Furthermore, the present invention relates to a modified polyvinylidene fluoride membrane, comprising at least one modified area obtainable by modifying a polyvinylidene fluoride membrane by a heat and pressure treatment under conditions satisfying the following equation:

$T \geq -0.015P+105$, wherein T is temperature ranging from 30°C to 170°C, P is pressure ranging from 1000 to 5000N/cm$^2$, wherein the modified area has diffraction peaks at diffraction ($2\theta°$) angles of $0.8 \pm 0.2$ degrees, $18.4 \pm 0.2$ degrees, $20.0 \pm 0.2$ degrees, and $26.8 \pm 0.2$ degrees in X-ray diffraction spectrum by a CuK$\alpha$-ray, and the unmodified area has diffraction peaks at diffraction ($2\theta°$) angles of $18.4 \pm 0.2$ degrees, $20.0 \pm 0.2$ degrees, and $26.8 \pm 0.2$ degrees in X-ray diffraction spectrum by a CuK$\alpha$-ray.

According to a preferable embodiment of the modified polyvinylidene fluoride membrane of the present invention, the heat and pressure treatment is carried out using a metallic mold.

According to another preferable embodiment of the modified polyvinylidene fluoride membrane of the present invention, the polyvinylidene fluoride membrane has a protein binding capacity of not less than $0.1 \mu g/cm^2$.

Furthermore, the present invention relates to a method for manufacturing a partly-modified polyvinylidene fluoride membrane, **characterized in that** a part of a polyvinylidene fluoride membrane is subjected to a heat and pressure treatment under the condition satisfying the following equation:

$$T \geqq -0.015P+105$$

wherein T is temperature ranging from 30°C to 170°C, P is pressure ranging from 1000 to 5000N/cm$^2$.

Further, the present invention relates to a method for manufacturing a laminated membrane for adsorbing a protein, comprising the following steps of:

(1) modifying a polyvinylidene fluoride membrane by a heat and pressure treatment under the condition satisfying the following equation:

$$T \geqq -0.015P+105$$

wherein T is temperature ranging from 30°C to 170°C, P is pressure ranging from 1000 to 5000N/cm$^2$, to obtain a modified polyvinylidene fluoride membrane; and

(2) laminating the modified polyvinylidene fluoride membrane and a protein adsorptive membrane by heat sealing, leaning at least a part of one membrane not covered by the other membrane.

According to a preferable embodiment of the method for manufacturing a laminated membrane for adsorbing a protein of the present invention, the heat and pressure treatment is carried out on all over the polyvinylidene fluoride membrane using a metalic mold.

It is also described a laminated membrane for adsorbing a protein, **characterized in that** a modified polyvinylidene fluoride membrane prepared by modifying a polyvinylidene fluoride membrane by a heat and pressure treatment under the condition satisfying the following equation:

$$T \gneqq -0.015P+105$$

wherein T is temperature ranging from 30°C to 170°C, P is pressure ranging from 1000 to 5000N/cm$^2$, and a protein non-adsorptive membrane, are laminated by heat sealing and at least a part of one membrane is not covered with the other membrane.

It is also described a laminated membrane for adsorbing a protein, **characterized in that** a modified polyvinylidene fluoride membrane having diffraction peaks at diffraction (2θ°) angles of 0.8 ± 0.2 degree, 18.4 ± 0.2 degree, 20.0 ± 0.2 degree, 26.8 ± 0.2 degree in X-ray diffraction spectrum by a CuKα-ray, and a protein non-adsorptive membrane, are laminated by heat sealing and at least a part of one membrane is not covered with the other membrane.

It is also described a laminated membrane for adsorbing a protein wherein the heat and pressure treatment is carried out on overall the polyvinylidene fluoride membrane.

It is also described a laminated membrane for adsorbing a protein of the present invention, the protein adsorptive membrane is a porous membrane prepared from one or more materials selected from the group consisting of polyvinylidene fluoride, nylon, nitrocellulose and polytetrafluoroethylene.

It is also described a laminated membrane for adsorbing a protein having a protein adsorptive area and a protein non-adsorptive area, **characterized in that** a protein adsorptive membrane and a protein non-adsorptive membrane are laminated by heat sealing and at least a part of one membrane is not covered with the other membrane.

It is also described a laminated membrane for adsorbing a protein of the present invention, the protein adsorptive membrane is one or more (laminated) porous membranes selected from the group consisting of a polyvinylidene fluoride, a nylon, a nitrocellulose and polytetrafluoroethylene.

It is also described a method for manufacturing a laminated membrane for adsorbing a protein having a protein adsorptive area and a protein non-adsorptive area, **characterized in that** a protein adsorptive membrane and a protein non-adsorptive membrane are laminated with heat sealing and at least a part of one membrane is not covered with the other membrane.

It is also described a laminated membrane for adsorbing a protein of the present invention, the protein adsorptive membrane is one or more (laminated) porous membranes selected from the group consisting of a polyvinylidene fluoride, a nylon, a nitrocellulose and polytetrafluoroethylene.

The term "a protein" as used herein includes from oligopeptide consisting of several amino acid residues obtained by synthesizing, to full length proteins existing in vivo. The length of the protein is not limited, so long as the protein consists of amino acid residues.

ADVANTAGEOUS EFFECTS OF INVENTION

According to the manufacturing method of the present invention, a protein adsorptive membrane can be simply and effectively divided into a protein adsorptive area and a protein non-adsorptive area, and therefore, the present invention can provide a protein adsorptive membrane wherein many proteins and/or peptides can be bound to the protein adsorptive membrane.

Further, according to the present invention, a polyvinylidene fluoride membrane is modified by a heat and pressure treatment, or a protein adsorptive membrane and a protein non-adsorptive membrane are laminated by heat sealing, whereby a protein adsorptive area and a protein non-adsorptive area can be arranged on the same flat surface in the substantially uniform height of the membrane. Therefore, a sample is easily brought into contact with an adsorptive area, when the membrane is used as a protein chip. In comparison with a membrane laminated using an adhesive, problems of the peeling-off of the laminated membrane or the like does not occur. Thus, the membrane according to the present invention provides a protein chip having high reliability in a washing process. Furthermore, in an immobilization process of a protein, peptides and/or proteins dissolved in an organic solvent can be adsorbed, because an adhesive is not used in the membrane of the present invention.

Further, method with high productivity for manufacturing a substrate for a protein chip can be provided, because a membrane having a wide area can be treated by a heat and pressure treatment or a heat seal treatment used in the present invention. In addition, it is difficult to form characters and drawings on the membrane by the conventional manufacturing method. According to the present invention, however, the characters and drawings can be formed easily on the membrane.

BRIEF DESCRIPTION OF DRAWINGS

Figure 1 is a graph showing protein adsorptivities of some polyvinylidene fluoride membranes after the polyvinylidene fluoride membranes are treated under the several conditions of heat and pressure treatment. The open circle (○) shows the condition wherein polyvinylidene fluoride membrane is modified to a protein non-adsorptivity by a heat and pressure treatment, the closed triangle (▲) shows the condition wherein a polyvinylidene fluoride membrane is not modified to a protein non-adsorptivity.

Figure 2a shows the diffraction peak of X-ray diffraction on a premodified polyvinylidene fluoride membrane, polyvinylidene fluoride membrane after a heat and pressure treatment, and polyvinylidene fluoride membrane after only a heat treatment. The diffraction peaks on polyvinylidene fluoride after only a heat treatment are almost-totally consistent with the diffraction peaks on a premodified polyvinylidene fluoride membrane. That is, this means that a modification does not occur by means of a heat treatment alone.

Figure 2b shows the diffraction peak of X-ray diffraction on a premodified polyvinylidene fluoride membrane, polyvinylidene fluoride membrane after a heat and pressure treatment, and polyvinylidene fluoride membrane after only a heat treatment. The diffraction peaks on polyvinylidene fluoride after only a heat treatment almost-totally correspond to the diffraction peaks on a premodified polyvinylidene fluoride membrane. That is, this means that a modification does not occur by means of a heat treatment alone.

Figure 3 is a schematic cross-sectional view illustrating the structure of a partly-modified polyvinylidene fluoride membrane of the present invention.

Figure 4 is a schematic plan view of illustrating the structure of a partly-modified polyvinylidene fluoride membrane of the present invention.

Figure 5 is a schematic cross-sectional view illustrating the structure of a laminated membrane for adsorbing a protein of the present invention.

Figure 6 is a schematic plan view illustrating the structure of a laminated membrane for adsorbing a protein of the present invention.

Figure 7 shows the result of a protein adsorptive test by dropping the alkaline phosphatase solution into particular part including unmodified areas of sample 1 in Example 1 using a dropper, in order that the character of "LIP" appears.

DESCRIPTION OF EMBODIMENT

[1] Method for manufacturing a modified polyvinylidene fluoride membrane according to the present invention

In the method for manufacturing a modified polyvinylidene fluoride membrane according to the present invention, a polyvinylidene fluoride membrane is subjected to a heat and pressure treatment under a particular temperature and a particular pressure, whereby the polyvinylidene fluoride membrane can be modified. More particular, a polyvinylidene fluoride membrane can be modified by a heat and pressure treatment under the condition of a temperature of 30°C to 170°C, a pressure of 1000 to 5000N/cm$^2$, with the temperature, T (in °C) and pressure, P (in N/m$^2$) constrained by the following formula : $T \geqq -0.015P+105$.

The term "modified" used herein means that the structure of a protein-adsorptive polyvinylidene fluoride is changed to a protein non-adsorptive structure. The structure of polyvinylidene fluoride is dramatically changed by the heat and pressure treatment, whereby a protein-adsorptive polyvinylidene fluoride membrane is modified to a protein non-adsorptive polyvinylidene fluoride membrane.

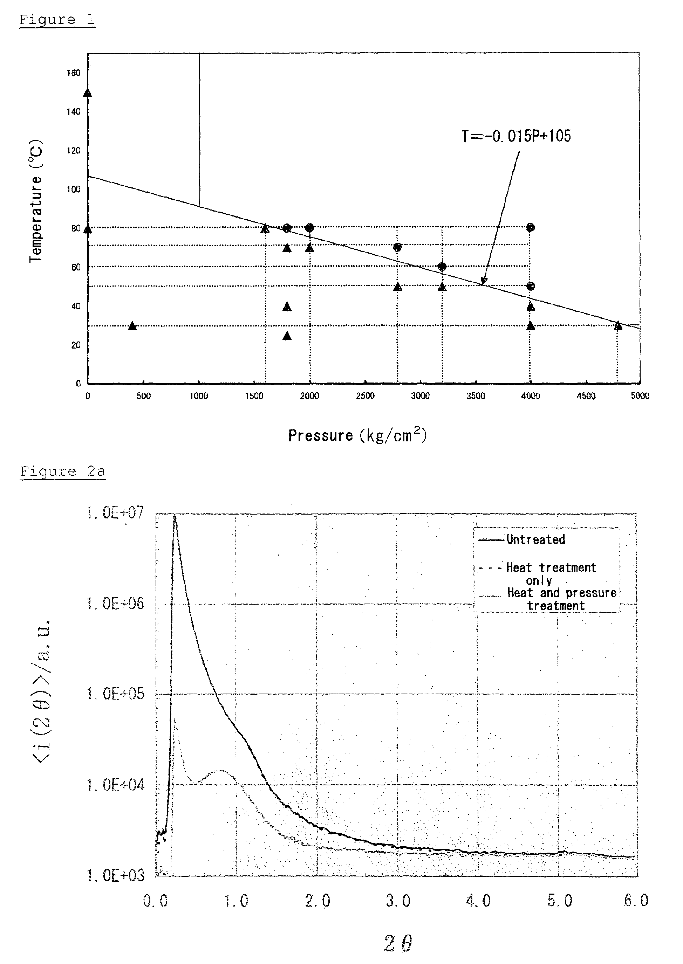

Specifically, in the graph of Figure 1 wherein an ordinate axis is a temperature (T) and an abscissa axis is a pressure (P) (T is 30°C to 170°C and P is 1000 N/cm$^2$ to 5000 N/cm$^2$), a polyvinylidene fluoride membrane is modified, when a heat and pressure treatment is performed under the condition that the combination of temperature and pressure lies on the linear function expressed as T=-0.015P+105 or in the upper region of the linear function in the graph. On the contrary, a polyvinylidene fluoride membrane can not be modified when a heat and pressure treatment is performed under the combination of a temperature and a pressure in the lower region of the linear function expressed as T=-0.015P+ 105 in the graph.

The heat and pressure treatment used in the present invention is performed by the combination of a particular temperature and a particular pressure as mentioned above. As shown in Comparative Example 7 (the temperature is room temperature (25°C) and the pressure is 1800 N/cm$^2$) and Comparative Example 11 (the temperature is 150°C and the pressure is 0 N/cm$^2$) as mentioned below, a polyvinylidene fluoride membrane can not be modified to be a protein non-adsorptive by only a pressure treatment or only a heat treatment. That is the combination of a temperature and a pressure is important.

The range of temperature in the heat and pressure treatment is preferably 30°C to 170°C, more preferably 45°C to 170°C, most preferably 50°C to 160°C. When the temperature is less than 30°C, modification is difficult and further cooling installation is also required. Meanwhile a softening point of a polyvinylidene fluoride membrane is 170°C. Therefore, as shown in Comparative Examples 14 to 17 as mentioned below, when the temperature is more than 170°C, a control of membrane size is difficult since the contraction of the membrane occurs. That is, dimensional stability becomes poor. Further, it is difficult to use as a membrane for a substrate of a protein chip due to the generation of irregularities over the entire membrane. When the temperature is more than the melting point of the polyvinylidene fluoride membrane, the adhesion of membrane to a metallic mold and a fracture in a membrane occur, and further, the decomposition of the polyvinylidene fluoride membrane may possibly cause the generation of a harmful gas.

The range of pressure of a heat and pressure treatment is 1000 to 5000N/cm$^2$, preferably 1500 to 5000N/cm$^2$, more preferably 1750 to 5000N/cm$^2$, most preferably 1800 to 5000N/cm$^2$. When the pressure is less than 1000N/cm$^2$, the protein adsorbable amount of the membrane does not become sufficiently lower. When the pressure is more than 5000N/cm$^2$, the polyvinylidene fluoride membrane is heavily damaged and an equipment for a heat and pressure treatment is also damaged.

The time of the heat and pressure treatment is not particularly limited, and is preferably 1 to 60 seconds, more preferably 2 to 30 seconds, most preferably 5 to 20 seconds. When the time is less than 1 second, the membrane can not be treated evenly. When the time is more than 60 seconds, the waste of a treating time occurs and the damage to the membrane is increased greatly.

Figure 1 shows the results of the protein adsorption test of the samples (Examples 1 to 6 and Comparative Examples 1 to 13) which are subjected to a heat and pressure treatment under the temperature and pressure conditions described above. In the protein adsorption test, the protein adsorptivity of the area subjected to a heat and pressure treatment is examined. From Figure 1, it is presumed that there is a boundary line between the combination of a temperature and a pressure which can induce the modification, and the combination of a temperature and a pressure which can not induce the modification. Because the boundary line seems to be closely analogous to a linear function, the boundary line can simply be expressed as a linear function written T=aP+b. It is presumed that the combination of a temperature and a pressure on the linear function or in the upper region of the linear function is a condition which can occur the modification, and the combination of a temperature and a pressure in the lower region of the linear function is a condition which can not occur the modification.

Therefore, in addition to the ranges of temperature and pressure (at 30°C to 170°C and under 1000 to 5000N/cm$^2$) mentioned above, a heat and pressure treatment preferably has a condition of the following formula in the graph wherein an ordinate axis is a temperature (T in °C) and an abscissa axis is a pressure (P in N/cm$^2$):

$$T \geqq aP+b.$$

In the formula, "a" shows the slope of the linear function, "b" shows a point of intersection with an ordinate axis (the y intercept). For example, the slope "a" and a point of intersection with an ordinate axis "b" can be briefly calculated by the following manner.

Two points on the temperature-pressure graph defining the heat and pressure condition are selected: heat and pressure treatment point 1 is close to the boundary line and a modification of membrane occurs under the condition defined by point 1, and point 2 is close to the boundary line and a modification of membrane dose not occur under the condition of point 2. Then, the middle point A showing an intermediate value between the point 1 and the point 2 is determined. Similarly, point 3, other than point 1, wherein the modification of a membrane occurs under the condition of the point 3, and point 4, other than point 2, wherein the modification of a membrane does not occur under the condition of the point 4, are selected respectively. Then, the middle point B showing an intermediate value between the point 3 and the point 4 is determined. The linear function containing the middle point A and the middle point B is calculated, and then "a" which means the slope of a linear function expressed as T=aP+b and "b" which means a point of intersection with an ordinate axis can be determined.

Specifically, a point of Example 1 (a temperature of 80°C and a pressure 2000N/cm$^2$ : referred to as point 1) and a point of Comparative Example 9 (a temperature of 70°C and a pressure 2000N/cm$^2$ : referred to as point 2) are selected. Under the condition of point 1 of Example 1, the modification of a polyvinylidene fluoride membrane occurs, but under the condition of point 2 of Comparative Example 9, the modification of a polyvinylidene fluoride membrane does not occur. Therefore, the point of an intermediate value showing a pressure of 2000N/cm$^2$ and a temperature of 75°C is determined as the middle point A. Similarly, a point of Example 3 (a temperature of 50°C and a pressure 4000N/cm$^2$ : referred to as point 3) and a point of Comparative Example 4 (a temperature of 40°C and a pressure 4000N/cm$^2$ : referred to as point 4) are selected. Under the condition of point 3 of Example 3, the modification of a polyvinylidene fluoride membrane occurs, but under the condition of point 4 of Comparative Example 4, the modification of a polyvinylidene fluoride membrane does not occur. Therefore, the point of an intermediate value showing a pressure of 4000N/cm$^2$ and

a temperature of 45°C is determined as the middle point B.

A linear function of a temperature and a pressure is calculated from the middle point A (a pressure of 2000N/cm$^2$ and a temperature of 75°C) and the middle point B (a pressure of 4000N/cm$^2$ and a temperature of 45°C). As a result, the slope "a" and a point of intersection with an ordinate axis "b" can be determined.

The linear function obtained by the method as mentioned above is expressed as

$$T=-0.015P+105.$$

A heat and pressure treatment is performed by the combination of a temperature and a pressure in the upper region of the linear function or on the linear function. That is, the modification of a polyvinylidene fluoride membrane occurs under the condition of a heat and pressure treatment of the following formula

$$T \geqq -0.015P+105.$$

The process of a heat and pressure treatment is not particularly limited, so long as a protein-adsorptive membrane can be subjected to a certain temperature and a certain pressure under control, but can include, for example, a heat and pressure treatment using metallic mold, and a heat and pressure treatment using a board such as kraft board.

It is possible to determine whether or not a modification of a polyvinylidene fluoride membrane occurs by the heat and pressure treatment by examining a protein adsorptivity of the membrane. In a modified polyvinylidene fluoride membrane, a protein can hardly be adsorbed, for example, a protein binding capacity of the membrane becomes no more than 0.005μg/cm$^2$, after the modification occurs. Further, the appearance of a modified region becomes translucent, while an appearance of a premodified polyvinylidene fluoride membrane is white and opaque. Furthermore, modified area has diffraction peaks which are different from the diffraction peaks of a premodified polyvinylidene fluoride membrane in X-ray diffraction. As a result, it is also possible to determine whether or not a modification of a polyvinylidene fluoride membrane occurs by the heat and pressure treatment using X-ray diffraction.

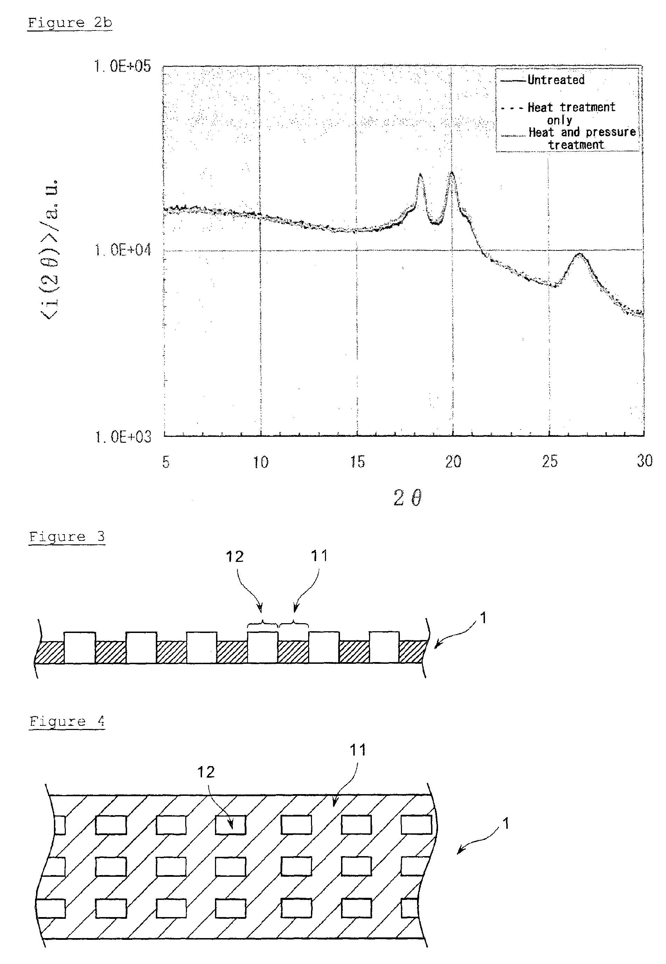

A modified area of a modified polyvinylidene fluoride membrane subjected to a heat and pressure treatment has diffraction peaks at diffraction (2θ°) angles of 0.8 ± 0.2 degree, 18.4 ± 0.2 degree, 20.0 ± 0.2 degree, 26.8 ± 0.2 degree in X-ray diffraction spectrum by a CuKα-ray. In contrast, a premodified polyvinylidene fluoride membrane does not have a diffraction peak at a diffraction (2θ°) angle of 0.8 ± 0.2 degree, but only has diffraction peaks at diffraction (2θ°) angles of 18.4 ± 0.2 degree, 20.0 ± 0.2 degree, 26.8 ± 0.2 degree in X-ray diffraction spectrum by a CuKα-ray (see Figure 2a and Figure 2b). The structure of a modified polyvinylidene fluoride membrane is dramatically changed compared to that of a premodified polyvinylidene fluoride membrane, and therefore, the change in a structure can easily be determined by the appearance of a diffraction peak at a diffraction (2θ°) angle of 0.8 ± 0.2 degree. For example, X-ray diffraction is conducted in accordance with the method described in Rigaku Electric Corporation center edit "a manual of X-ray diffraction (X-sen kaisetu no tebiki)", fourth revised edition, Rigaku Electric Corporation, December 30, 1986.

The polyvinylidene fluoride membrane which can be used for a method for manufacturing a modified polyvinylidene fluoride membrane according to the present invention is not limited, so long as it is a polyvinylidene fluoride membrane which can adsorb a protein. For example, the protein binding capacity in a premodified polyvinylidene fluoride membrane is preferably not less than 0.1pg/cm$^2$, more preferably not less than 0.5μg/cm$^2$, most preferably not less than 1.0μg/cm$^2$. Further, the premodified polyvinylidene fluoride membrane is preferably a hydrophobic polyvinylidene fluoride membrane, because a hydrophobic polyvinylidene fluoride membrane has a high adsorptive performance of a protein, in comparison with a hydrophilic polyvinylidene fluoride membrane.

The molecular weight of a protein which binds to polyvinylidene fluoride membrane is not limited. For example, a protein having a molecular weight of 5 to 1000kD may be bound to a premodified polyvinylidene fluoride membrane.

Further, the premodified polyvinylidene fluoride membrane is porous, and a pore diameter of the membrane is preferably 1 to 2000nm, more preferably 10 to 1500nm, most preferably 100 to 1000nm.

For example, a modified polyvinylidene fluoride membrane of the present invention can be obtained by a method for manufacturing a modified polyvinylidene fluoride membrane of the present invention. According to the manufacturing method of the present invention, a polyvinylidene fluoride membrane can be modified in whole or in part of the membrane. An overall modified polyvinylidene fluoride membrane, which is modified in whole, can be obtained, for example, by carrying out a heat and pressure treatment all over a membrane using a flat metallic mold. In this case, the surface of the metallic mold which is brought into contact with a membrane is flat in whole. On the other hand, a partly modified polyvinylidene fluoride membrane, which is modified in part, can be obtained by a heat and pressure treatment using a metallic mold. In this case, a part of the metallic mold is not brought into contact with a membrane, for example, there are some holes on a surface of the metallic mold. Specifically, a modified polyvinylidene fluoride membrane according to the present invention includes an overall modified polyvinylidene fluoride membrane which is composed of a modified area only, as well as a partly modified polyvinylidene fluoride membrane comprising a modified area and an unmodified area.

The structure of the partly modified polyvinylidene fluoride membrane is schematically explained according to the cross-sectional view of Figures 3 to the schematic plan view of Figure 4. A partly modified polyvinylidene fluoride membrane consists of an unmodified area 12 and a modified area 11. The planar dimension, the position and the shape of the unmodified area 12 are not limited, but may be any planar dimensions, positions and shapes. However, for example, as the embodiment as shown in Figure 4, the unmodified area 12 is preferably surrounded by a modified area 11, in a partly modified polyvinylidene fluoride membrane. When the unmodified area 12 is surrounded by the modified area 11, a protein binding to an unmodified area is distinctly separated from a protein binding to other unmodified areas. In the case of such an embodiment, the size, the shape and the number of the unmodified areas 12 are not limited, but may be any sizes, shapes and numbers, so long as a protein can bind to the unmodified area 12.

The modified area 11 preferably surrounds the unmodified area 12, but the shape of the modified area 11 can optionally be adjusted in accordance with the shape of the unmodified area 12.

In a modified polyvinylidene fluoride membrane according to the present invention, specifically, a modified area is a protein non-adsorptive area, and an unmodified area is a protein adsorptive area. A protein non-adsorptive area is composed of a protein non-adsorptive membrane which can not substantially adsorb a protein. The protein binding capacity of the protein non-adsorptive area is preferably not more than $0.01\mu g/cm^2$, more preferably not more than $0.005\mu g/cm^2$, most preferably not more than $0.001\mu g/cm^2$. On the other hand, a protein adsorptive area is composed of a protein adsorptive membrane. The protein binding capacity of the protein adsorptive area is preferably not less than $0.1\mu g/cm^2$, more preferably not less than $0.5\mu g/cm^2$, most preferably not less than $1\mu g/cm^2$.

A Method for manufacturing a laminated membrane for adsorbing a protein by heat sealing In a method for manufacturing a laminated membrane for adsorbing a protein, a protein adsorptive membrane and a protein non-adsorptive membrane are laminated by heat sealing. The laminated membrane is manufactured by heat sealing, and consequently a protein adsorptive membrane and a protein non-adsorptive membrane after heat sealing are located on the same flat surface which is almost without irregularities. A protein adsorptive membrane and/or a protein non-adsorptive membrane are softened at a heating temperature which is not less than the softening point of at least one membrane of the fused protein adsorptive membrane and the protein non-adsorptive membrane for laminating and, as a result, heat sealing of the protein adsorptive membrane with the protein non-adsorptive membrane is possible. The heating temperature preferably ranges from a softening point of either of the above membranes, to the softening point +5°C. For example, when a polyvinylidene fluoride membrane is used, a heating temperature is preferably 170 to 175°C. If the heating temperature is less than 170°C, a polyvinylidene fluoride membrane is not softened. If the heat temperature is more than 175°C, handling the heat seal is difficult due to an excess fusion of the membrane.

The heating time is not limited, but is preferably 3 to 60 seconds, more preferably 5 to 30 seconds, most preferably 10 to 20 seconds. Further, the heating process is also not limited, so long as the temperature is uniform all over a membrane. The membrane can be heated using, for example, incubator [SPHH-201 (manufactured by ESPEC CORP.)].

Examples of a protein adsorptive membrane which can be used for methods for manufacturing a laminated membrane for adsorbing a protein according to the present invention are a polyvinylidene fluoride membrane, a nylon membrane, a nitrocellulose membrane, or a polytetrafluoroethylene membrane. Further, Examples of a protein non-adsorptive membrane are a polyvinylidene fluoride membrane, a polytetrafluoroethylene membrane, or the modified polyvinylidene fluoride membrane. Specifically, the modified polyvinylidene fluoride membrane is preferably used, and an overall modified polyvinylidene fluoride membrane is more preferably used. Furthermore, if a protein binding capacity of a premodified polyvinylidene fluoride membrane is not more than $0.01\mu g/cm^2$, a premodified polyvinylidene fluoride membrane can be used as a protein non-adsorptive membrane. For example, a hydrophilic polyvinylidene fluoride membrane can be use as a protein non-adsorptive membrane, and a hydrophobic polyvinylidene fluoride membrane can be used a protein adsorptive membrane.

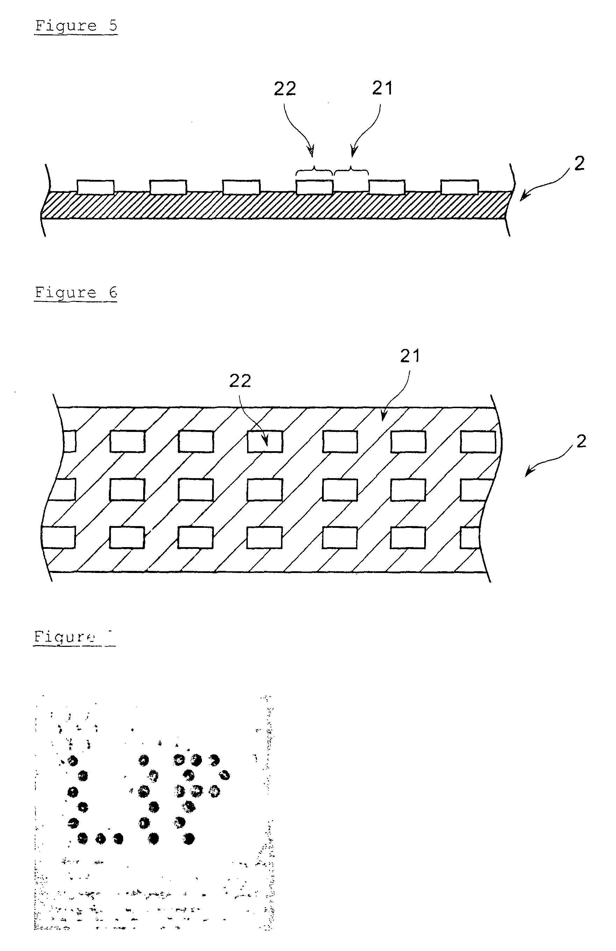

The structure of the laminated membrane for adsorbing a protein is schematically explained by the cross-sectional views of Figure 5 and the schematic plan view of Figure 6. The laminated membrane for adsorbing a protein consists of the protein adsorptive area 22 and the protein non-adsorptive area 21. The planar dimension, the position and the shape of the protein adsorptive area 22 are not limited to, but may be any planar dimensions, positions and shapes. However, for example, as the embodiment shown in Figure 6, the protein adsorptive area 22 is preferably surrounded by the protein non-adsorptive area 21, in a partly modified polyvinylidene fluoride membrane. When the protein adsorptive area 22 is surrounded by the protein non-adsorptive area 21, a protein binding to the protein adsorptive area 22 is distinctly separated from a protein binding to other protein adsorptive areas 22. In the case of such an embodiment, the size, the shape and a number of the protein adsorptive area 22 are not limited, but may be any sizes, any shapes and any numbers, so long as a protein can bind to the protein adsorptive area 22. The protein non-adsorptive area 21 preferably surrounds the protein adsorptive area 22, but the shape in the protein non-adsorptive area 21 can optionally be adjusted in accordance with the shape of the protein adsorptive area 22.

A protein non-adsorptive area is composed of a protein non-adsorptive membrane which can not substantially adsorb a protein. A protein binding capacity is preferably not more than $0.01\mu g/cm^2$, more preferably not more than $0.005\mu g/cm^2$, most preferably not more than $0.001\mu g/cm^2$. On the other hand, a protein adsorptive area is composed of a protein adsorptive membrane. A protein binding capacity is preferably not less than $0.1\mu g/cm^2$, more preferably not less than $0.5\mu g/cm^2$, most preferably not less than $1\mu g/cm^2$.

A synthesized protein can be used as a protein to be adsorbed to the membrane. A protein collected from human or living beings other than human, can be also used as a protein to be adsorbed to the membrane. Further, a recombinant protein can be prepared from genes separated from human, animals, bacteria, yeast, plants or the like, and then the recombinant protein can be used as a protein to be adsorbed to the membrane. Furthermore, a protein having any variation, a protein consisting of artificial amino acid sequence randomly synthesized, or a protein containing unnatural amino acid can be also used, in addition to natural protein derived from living being. Specific examples of such proteins are antibodies, antigenic proteins and the like.

Conventional methods for binding a protein to a membrane can be used for protein binding. A protein can bind to the membrane under the condition that the protein is dissolved in a solution, because the membrane used in the present invention easily adsorbs a protein. In the case of a short oligopeptide consisting of a few amino acid residues, the short oligopeptide can be dissolved in organic solvents to bind the short oligopeptide to a membrane. Further, a protein can bind to a membrane by means of physical adsorption or chemical adsorption. Furthermore, as the method for coercively binding a protein, there may be mentioned, for example, optical lithography method, mechanical micro-spotting methods, micro-printing methods, electrospray methods, ink jet printing methods and the like.

Function

In the method for manufacturing a modified polyvinylidene fluoride membrane according to the present invention, the mechanism of modifying a protein adsorptive polyvinylidene fluoride membrane to a modified protein non-adsorptive membrane has not been fully elucidated, but is presumed to be as follows. However, the present invention is by no means limited to the following description.

A modified polyvinylidene fluoride membrane has a diffraction peaks at diffraction ($2\theta°$) angle of $0.8 \pm 0.2$ degree, $18.4 \pm 0.2$ degree, $20.0 \pm 0.2$ degree, and $26.8 \pm 0.2$ degree. Particularly, the diffraction peak at a diffraction ($2\theta°$) angle of $0.8 \pm 0.2$ degree which is not shown in an unmodified polyvinylidene fluoride membrane, appears after a modification. Generally, the structure of a protein adsorptive unmodified polyvinylidene fluoride membrane is composed of a structure of trans and gauche, and the structure of trans and gauche are irregularly arranged. The structure of trans and gauche which are irregularly arranged, changes to the structure of trans and gauche which are regularly arranged in part after a heat and pressure treatment performed by manufacturing methods according to the present invention and, as a result, a protein adsorptive polyvinylidene fluoride membrane is modified to a non-adsorptive modified polyvinylidene fluoride membrane.

EXAMPLES

The present invention now will be further explained by, but is by no means limited to, the following Examples.

Example 1

A metallic mold heated to a temperature of 80°C were set in a small hot press (manufactured by IMOTO MACHINERY CO. LTD., IMC-11D2), and then a polyvinylidene fluoride membrane (5cm x 5cm) (manufactured by Bio-Rad Laboratories, Inc.) was subjected to a heat and pressure treatment for 15 seconds. The contact surface of a metallic mold bringing into contact with a membrane was a 5cm x 5cm square, and had 168 circular holes each having a diameter of 3mm. Thus, parts of the membrane corresponding to the position of the holes were not subjected to a heat and pressure treatment. Accordingly, a membrane area corresponding to the contact surface (the area other than holes) of a metallic mold was modified to be a modified area, and membrane areas corresponding to holes were not modified remaining unmodified areas. A partly-modified polyvinylidene fluoride membrane, in which unmodified areas were surrounded by a modified area and unmodified areas were separated from each other, was obtained. This partly modified polyvinylidene fluoride membrane was referred to as Sample E1. The properties of the polyvinylidene fluoride membrane (manufactured by Bio-Rad Laboratories, Inc., Immun-Blot PVDF Membrane) used herein were as follows:

Pore diameter : 100~1000nm
Protein binding capacity : $2.1\mu g/cm^2$

## Example 2

The procedure described in Example 1 was repeated, except that the temperature of the metallic mold was 60°C and the pressure of the metallic mold was 3200N/cm$^2$, to obtain a partly-modified polyvinylidene fluoride membrane. This partly-modified polyvinylidene fluoride membrane is referred to as Sample E2.

## Example 3

The procedure described in Example 1 was repeated, except that the temperature of the metallic mold was 50°C and the pressure of the metallic mold was 4000N/cm$^2$, to obtain a partly-modified polyvinylidene fluoride membrane. This partly-modified polyvinylidene fluoride membrane is referred to as sample E3.

## Example 4

The procedure described in Example 1 was repeated, except that the temperature of the metallic mold was 80°C and the pressure of the metallic mold was 4000N/cm$^2$, to obtain a partly-modified polyvinylidene fluoride membrane. This partly-modified polyvinylidene fluoride membrane is referred to as sample E4.

## Example 5

The procedure described in Example 1 was repeated, except that the temperature of the metallic mold was 80°C and the pressure of the metallic mold was 1800N/cm$^2$, to obtain a partly-modified polyvinylidene fluoride membrane. This partly-modified polyvinylidene fluoride membrane is referred to as sample E5.

## Example 6

The procedure described in Example 1 was repeated, except that the temperature of the metallic mold was 70°C and the pressure of the metallic mold was 2.800N/cm$^2$, to obtain a partly-modified polyvinylidene fluoride membrane. This partly-modified polyvinylidene fluoride membrane is referred to as sample E6.

## Comparative Example 1

The procedure described in Example 1 was repeated, except that the temperature of the metallic mold was 80°C and the pressure of the metallic mold was 1600N/cm$^2$, to obtain a polyvinylidene fluoride membrane. This polyvinylidene fluoride-membrane is referred to as Sample CE1.

## Comparative Example 2

The procedure described in Example 1 was repeated, except that the temperature of the metallic mold was 50°C and the pressure of the metallic mold was 2800N/cm$^2$, to obtain a polyvinylidene fluoride membrane. This polyvinylidene fluoride membrane is referred to as sample CE2.

## Comparative Example 3

The procedure described in Example 1 was repeated, except that the temperature of the metallic mold was 40°C and the pressure of the metallic mold was 4000N/cm$^2$, to obtain a polyvinylidene fluoride membrane. This polyvinylidene fluoride membrane is referred to as sample CE3.

## Comparative Example 4

**[0043]**    [0040] The procedure described in Example 1 was repeated, except that the temperature of the metallic mold was 30°C and the pressure of the metallic mold was 400N/cm$^2$, to obtain a polyvinylidene fluoride membrane. This polyvinylidene fluoride membrane is referred to as sample CE4.

## Comparative Example 5

**[0044]**    [0041] The procedure described in Example 1 was repeated, except that the temperature of the metallic mold was 40 °C and the pressure of the metallic mold was 1800N/cm$^2$, to obtain a polyvinylidene fluoride membrane. This polyvinylidene fluoride membrane is referred to as sample CE5.

Comparative Example 6

**[0045]** [0042] The procedure described in Example 1 was repeated, except that temperature of the metallic mold was 80°C and the pressure of the metallic mold was 0N/cm$^2$ (without pressurization), to obtain a polyvinylidene fluoride membrane. This polyvinylidene fluoride membrane is referred to as Comparative CE6.

Comparative Example 7

**[0046]** [0043] The procedure described in Example 1 was repeated, except that the temperature of the metallic mold was room temperature (25°C) and the pressure of the metallic mold was 1800N/cm$^2$, to obtain a polyvinylidene fluoride membrane. This polyvinylidene fluoride membrane is referred to as sample CE7.

Comparative Example 8

The procedure described in Example 1 was repeated, except that the temperature of the metallic mold was 70°C and the pressure of the metallic mold was 1800N/cm$^2$, to obtain a polyvinylidene fluoride membrane. This polyvinylidene fluoride membrane is referred to as sample CE8.

Comparative Example 9

The procedure described in Example 1 was repeated, except that the temperature of the metallic mold was 70°C and the pressure of the metallic mold was 2000N/cm$^2$, to obtain a polyvinylidene fluoride membrane. This polyvinylidene fluoride membrane was referred to as sample CE9.

Comparative Example 10

The procedure described in Example 1 was repeated, except that the temperature of the metallic mold was 50°C and the pressure of the metallic mold was 3200N/cm$^2$, to obtain a polyvinylidene fluoride membrane. This polyvinylidene fluoride membrane is referred to as sample CE10.

Comparative Example 11

The procedure described in Example 1 was repeated, except that the temperature of the metallic mold was 150°C and the pressure of the metallic mold was 0N/cm$^2$ (without pressurization), to obtain a polyvinylidene fluoride membrane. This polyvinylidene fluoride membrane is referred to as sample CE11.

Comparative Example 12

The procedure described in Example 1 was repeated, except that the temperature of the metallic mold was 30°C and the pressure of the metallic mold was 4000N/cm$^2$, to obtain a polyvinylidene fluoride membrane. This polyvinylidene fluoride membrane is referred to as sample CE12.

Comparative Example 13

The procedure described in Example 1 was repeated, except that the temperature of the metallic mold was 30°C and the pressure of the metallic mold was 4800N/cm$^2$, to obtain a polyvinylidene fluoride membrane. This polyvinylidene fluoride membrane is referred to as sample CE13.

Test of protein adsorptive

Alkaline phosphatase was used as a protein, and the protein adsorption of a modified area and an unmodified area on Samples E1 to E6 obtained in Examples 1 to 6 and Samples CE1 to CE13 obtained in Comparative Examples 1 to 13 were examined using a detection kit (manufactured by Promega K.K., Protoblot AP system with Stabilized Substrate, Mouse).
An alkaline phosphatase (Anti-Mouse IgG(H+L) AP conjugate, included in the kit) was dissolved in 20mM of Tris-HCl buffer solution (pH7.5) to make the 2μg/mL solution. The Samples E1 to E6 and Samples CE1 to CE13 were immersed in ethanol in advance, and the these Samples were immersed in 10mL of the alkaline phosphatase solution in a polystyrene petri dish (manufactured by AGC TECHNO GLASS CO., LTD., SH90-20) for 10 minutes. After each of the samples was washed five times with Tris-HCl buffer solution, NBT solution (WesternBlue Stabilized Substrate for Alkaline Phosphatase, contained in the kit) was added on the Samples, and then the presence or absence of a coloring development was checked. The Alkaline Phosphatase-adsorbed areas changed to purple.

A protein adsorptive of a modified area and an unmodified area in a polyvinylidene fluoride membrane were visually observed by the difference of a coloring development. The results of the evaluation are shown in the following Table 1. Further, the procedure of the test of protein adsorption described above was repeated using Sample E1, except that the alkaline phosphatase solution was dropped using a dropper on particular part including unmodified areas so that a character of "LIP" appears, and then the whole was allowed to stand for 10 minutes, instead of immersing the samples in the alkaline phosphatase solution in a polystyrene petri dish.

The result is shown in Figure 7. The unmodified areas, wherein Alkaline Phosphatase was dropped, were turned purple.

Table 1

| Sample | Heat and pressure treatment | | Determination of protein adsorption |
|---|---|---|---|
| | Pressure (N/cm$^2$) | Temperature (°C) | |
| E1 | 2000 | 8 0 | ○ |
| E2 | 3200 | 60 | ○ |
| E3 | 4000 | 50 | ○ |
| E4 | 4000 | 80 | ○ |
| E5 | 1800 | 80 | ○ |
| E6 | 2800 | 70 | ○ |
| CE1 | 1600 | 80 | × |
| CE2 | 2800 | 50 | × |
| CE3 | 4000 | 40 | × |
| CE4 | 400 | 30 | × |
| CE5 | 1800 | 40 | × |
| CE6 | 0 | 80 | × |
| CE7 | 1800 | Room temperature (25°C) | × |
| CE8 | 1800 | 70 | × |
| CE9 | 2000 | 70 | × |
| CE10 | 3200 | 50 | × |
| CE11 | 0 | 1 50 | × |
| CE12 | 4000 | 30 | × |
| CE13 | 4800 | 30 | × |
| ○: a protein adsorptive area and a protein non-adsorptive area could be distinguished on the basis of a visual evaluation ×: a protein adsorptive area and a protein non-adsorptive area could not be distinguished on the basis of a visual evaluation | | | |

Table 1 shows the results of evaluation, by protein adsorption, of the modification of a polyvinylidene fluoride membrane which is subjected to a heat and pressure treatment. The results were plotted in Figure 1 wherein an ordinate axis is a temperature (T) and an abscissa axis is a pressure (P). ○ shows Samples E1 to E6 of Examples 1 to 6 respectively. Δ shows Samples CE1 to CE13 of Comparative Examples 1 to 13 respectively. It was found from Figure 1 that the combination of a particular temperature and a particular pressure caused a modification of a polyvinylidene fluoride membrane and, as a result, the protein adsorptivity of the membrane was dramatically decreased. The combinations of temperature and pressure where a polyvinylidene fluoride membrane could be modified were the combinations of temperature and pressure located in the upper region of the linear function (T=-0.015P+105) in the Figure 1.

Comparative Examples 14 to 17

A heat and pressure treatment was performed at temperatures over 170°C which is the softening point of a polyvinylidene fluoride membrane. The procedure described in Example 1 was repeated, except that a metallic mold of 5cm square, wherein contact surface is flat and does not have holes, was used, and the temperature was 175°C and the pressure was 0N/cm$^2$. The resulting polyvinylidene fluoride membrane is referred to as Sample CE14. The Sample CE14 shrank by a small percentage of its total size. In addition, irregularities were formed on the surface of the membrane, and thus the smoothness of the membrane was lost.

The procedure described in Example 1 was repeated, except that the temperature of the metallic mold was 240°C and the pressure of the metallic mold was 0N/cm$^2$, the temperature of the metallic mold was 175°C and the pressure of the metallic mold was 30N/cm$^2$, or the temperature of the metallic mold was 240°C and the pressure of the metallic mold was 30N/cm$^2$, respectively. The resulting polyvinylidene fluoride membranes are referred to as Sample CE15, Sample CE16, and Sample CE17, respectively. Samples CE15 to CE17, shrank by a small percentage of their original size. When the temperature is high, the shrinkage of size is increased. Furthermore, irregularities were formed on the surface of the membrane, and thus the smoothness of membrane was lost. Therefore, these samples CE15 to CE17 can not be used as a modified membrane.

Example 7 and Comparative Example 18: X-ray diffraction structural analysis

The procedure described in Example 1 was repeated, except that a metallic mold of 5cm square, wherein the contact surface is flat, is used, the temperature was 80°C and the pressure was 4000N/cm$^2$, to obtain an overall modified polyvinylidene fluoride membrane modified all over the membrane. The resulting overall modified-polyvinylidene fluoride membrane is referred to as Sample E7.

The procedure described in Example 1 was repeated, except that a metallic mold of 5cm square, wherein the contact surface is flat, is used, the temperature was 80°C and the pressure was 0N/cm$^2$, to obtain an unmodified polyvinylidene fluoride membrane. The resulting unmodified polyvinylidene fluoride membrane is referred to as Sample CE18.

The sample E7, Sample CE18 and an untreated polyvinylidene fluoride membrane were analyzed by X-ray diffraction (see Figure 2a and Figure 2b). M18XHF-SRA (manufactured by MAC SCIENCE) was used as the X-ray diffraction measurement equipment. The applied voltage of X-ray tube was 50kV and the current was 296mA.

The results of the evaluation are shown in the following Figure 2a and Figure 2b. Figure 2a shows the result of a measurement on small-angle scattering technique wherein the diffraction (2θ°) angle varies from 0° to 6.00°. Figure 2b shows the result of a measurement on wide-angle scattering technique wherein the diffraction (2θ°) angle varies from 5.00° to 30.00°. An untreated polyvinylidene fluoride membrane and an unmodified Sample CE18 which was treated only by a heat treatment, had diffraction peaks at diffraction angles of 18.4°, 20.0°, and 26.8°. On the other hand, a modified Example sample 7 had diffraction peaks at diffraction angles of 0.8°, 18.4°, 20.0°, and 26.8°.

Example 8

An untreated polyvinylidene fluoride membrane was laminated to an overall modified polyvinylidene fluoride membrane by heat sealing to prepare a laminated membrane, for adsorbing a protein, having a protein adsorptive area and a protein non-adsorptive area.

A metallic mold (5cm×5cm) having the whole flat surface was set in a small hot press (manufactured by IMOTO MACHINERY CO. LTD., IMC-11D2). The metallic mold was heated to a temperature of 80°C, and then a polyvinylidene fluoride-membrane (5cm x 5cm) (manufactured by Bio-Rad Laboratories, Inc.) was subjected to a heat and pressure treatment under a pressure of 1800N/cm$^2$ over the whole surface to obtain an overall modified polyvinylidene fluoride membrane.

The resulting overall modified polyvinylidene fluoride membrane was placed in incubator (manufactured by ESPEC CORP., SPHH-201). After the overall-modified polyvinylidene fluoride membrane was heated to 171°C, a heat seal treatment was performed for 10 seconds by contacting untreated polyvinylidene fluoride membranes (10mm×10mm) (manufactured by Bio-Rad Laboratories, Immun-Blot PVDF Membrane) with the heated an overall-modified polyvinylidene fluoride membrane. A laminated membrane for adsorbing a protein wherein untreated (unmodified) polyvinylidene fluoride membrane areas (protein adsorptive areas) were surrounded by a modified polyvinylidene fluoride membrane area (a protein non-adsorptive area) was obtained.

The protein adsorption test as described above was carried out for the resulting laminated membrane for adsorbing a protein, whereby it was confirmed that a protein adsorptive area and a protein non-adsorptive area could be clearly visually distinguished. The results of the evaluation are shown in the following Table 2.

Example 9

An overall-modified polyvinylidene fluoride membrane was laminated to an untreated polyvinylidene fluoride membrane by heat sealing, to prepare a laminated membrane for adsorbing a protein having a protein adsorptive area and a protein non-adsorptive area.
An overall-modified polyvinylidene fluoride membrane obtained by the procedure described in Example 8 was cut into 10mm×10mm. A untreated polyvinylidene fluoride membrane (5cm×5cm) (manufactured by Bio-Rad Laboratories, Immun-Blot PVDF Membrane) was placed in an incubator (manufactured by ESPEC CORP., SPHH-201). After the untreated polyvinylidene fluoride membrane was heated to 171°C, a heat seal treatment was performed by contacting the overall-modified polyvinylidene fluoride membrane which is cut to 10mm×10rmn with the heated premodified polyvinylidene fluoride membrane. A laminated membrane for adsorbing a protein wherein a modified polyvinylidene fluoride membrane area (a protein non-adsorptive area) was surrounded by a premodified polyvinylidene fluoride membrane area (a protein adsorptive area) was obtained.
The protein adsorption test as described above was carried out for the resulting laminated membrane for adsorbing a protein, whereby it was confirmed that a protein adsorptive area and a protein non-adsorptive area could be clearly visually distinguished. The results of the evaluation are shown in the following Table 2.

Example 10

A protein-adsorptive membrane and a protein non-adsorptive membrane were laminated by heat sealing, to prepare a laminated membrane for adsorbing a protein having a protein adsorptive area and a protein non-adsorptive area.
An untreated polyvinylidene fluoride membrane (manufactured by Bio-Rad Laboratories, Immun-Blot PVDF Membrane), which can adsorb a protein (referred to as protein-adsorptive PVDF membrane), was used as a protein adsorptive membrane, and another kind of untreated polyvinylidene fluoride membrane (TERRACY (registered mark) manufactured by Kureha Extech Co., Ltd.), which can not adsorb a protein (referred to as protein non-adsorptive PVDF membrane), was used as a protein non-adsorptive membrane. The protein non-adsorptive PVDF membrane was placed in incubator (manufactured by ESPEC CORP., SPHH-201). After the protein non-adsorptive PVDF membrane was heated to 171°C, a heat seal treatment was performed by contacting the protein-adsorptive PVDF membrane with the protein non-adsorptive PVDF membrane. As a result, a laminated membrane for adsorbing a protein wherein a protein adsorptive area was surrounded by a protein non-adsorptive area was obtained.
The protein adsorption test as described above was carried out for the resulting laminated membrane for adsorbing a protein, whereby it was confirmed that a protein adsorptive area and a protein non-adsorptive area could be clearly visually distinguished. The results of the evaluation are shown in the following Table 2.

Table 2

| Sample | Determination of protein adsorption |
|--------|-------------------------------------|
| E8 | ○ |
| E9 | ○ |
| E10 | ○ |

It was found from Table 2 that a protein adsorptive membrane and a protein non-adsorptive membrane were treated with heat seal, whereby a protein adsorptive area and a protein non-adsorptive area could be clearly distinguished.

INDUSTRIAL APPLICABILITY

A modified polyvinylidene fluoride membrane and a laminated membrane according to the present invention can be used as a substrate for adsorbing a protein and used for a protein chip. Further, the modified polyvinylidene fluoride membrane and the laminated membrane can be used as a protein transfer membrane for western blot and dot blot. In the case of a laminated membrane prepared using an adhesive, an organic solvent can not be used for dissolving a protein. However, a modified polyvinylidene fluoride membrane and a laminated membrane according to the present invention can bind with a short-oligopeptide which can dissolve only in an organic solvent, because an adhesive is not used.

REFERENCE SIGNS LIST

1···partly-modified polyvinylidene fluoride membrane
11···unmodified area
12···modified area
2···laminated membrane for protein adsorption
22···protein adsorptive area
21···protein non-adsorptive area

CITATION LIST

[Patent Reference No. 1] International Publication WO98/20020

**Claims**

1.  A method for manufacturing a modified polyvinylidene fluoride membrane comprising at least one modified area, **characterized in that** the modified area is obtained by subjecting a polyvinylidene fluoride membrane to a heat and pressure treatment under the condition satisfying the following equation T $\geq$-0.015P+105, wherein T is temperature ranging from 30°C to 170°C, P is pressure ranging from 1000 to 5000N/cm$^2$.

2.  The method for manufacturing a modified polyvinylidene fluoride membrane according to claim 1, **characterized in that** the whole polyvinylidene fluoride membrane is subjected to a heat and pressure treatment under conditions satisfying the following equation : T $\geq$-0.015P+105, wherein T is temperature ranging from 30°C to 170°C, P is pressure ranging from 1000 to 5000N/cm$^2$, to obtain an overall modified polyvinylidene fluoride membrane.

3.  The method for manufacturing a modified polyvinylidene fluoride membrane according to claim 1, **characterized in that** a part of a polyvinylidene fluoride membrane is subjected to a heat and pressure treatment under the conditions satisfying the following equation T $\geq$ -0.015P+105, wherein T is temperature ranging from 30°C to 170°C, P is pressure ranging from 1000 to 5000N/cm$^2$, to obtain a partly-modified polyvinylidene fluoride membrane having at least one modified area and an unmodified area.

4.  The method for manufacturing the modified polyvinylidene fluoride membrane according to any one of claims 1 to 3, wherein the heat and pressure treatment is carried out using a metallic mold.

5.  The method for manufacturing the modified polyvinylidene fluoride membrane according to any one of claims 1 to 4, wherein the unmodified polyvinylidene fluoride membrane has a protein binding capacity of not less than 0.1$\mu$g/cm$^2$.

6.  Use of the modified polyvinylidene fluoride membrane obtained by the method according to any one of claims 1 to 5, **characterized in that** the modified polyvinylidene fluoride membrane and a protein adsorptive membrane are laminated by heat sealing, leaving at least a part of one membrane not covered by the other membrane.

7.  A modified polyvinylidene fluoride membrane, comprising at least one modified area obtainable by modifying a polyvinylidene fluoride membrane by a heat and pressure treatment under conditions satisfying the following equation: T $\geq$ -0.015P+105, wherein T is temperature ranging from 30°C to 170°C, P is pressure ranging from 1000 to 5000N/cm$^2$, wherein the modified area has diffraction peaks at diffraction (2$\theta$°) angles of 0.8 $\pm$ 0.2 degrees, 18.4 $\pm$ 0.2 degrees, 20.0 $\pm$ 0.2 degrees, and 26.8 $\pm$ 0.2 degrees in X-ray diffraction spectrum by a CuK$\alpha$-ray, and the unmodified area has diffraction peaks at diffraction (2$\theta$°) angles of 18.4 $\pm$ 0.2 degrees, 20.0 $\pm$ 0.2 degrees, and 26.8 $\pm$ 0.2 degrees in X-ray diffraction spectrum by a CuK$\alpha$-ray.

8.  The modified polyvinylidene fluoride membrane according to claim 7, wherein the modified polyvinylidene fluoride membrane is an overall modified polyvinylidene fluoride membrane.

9.  The modified polyvinylidene fluoride membrane according to claim 7, wherein the modified polyvinylidene fluoride membrane is a partly-modified polyvinylidene fluoride membrane having at least one modified area and an unmodified area.

10. The modified polyvinylidene fluoride membrane according to any one of claims 7 to 9, wherein the heat and pressure treatment is carried out using a metallic mold.

11. The modified polyvinylidene fluoride membrane according to any one of claims 7 to 10, wherein the unmodified polyvinylidene fluoride membrane has a protein binding capacity of not less than 0.1 $\mu$g/cm$^2$.

12. A laminated membrane for adsorbing a protein, **characterized in that** a modified polyvinylidene fluoride membrane according to any one of claims 7 to 11, and a protein adsorptive membrane, are laminated by heat sealing, and at least a part of one membrane is not covered with the other membrane.

**Patentansprüche**

1. Ein Verfahren zur Herstellung einer modifizierten Polyvinylidenfluorid-Membran umfassend wenigstens eine modifizierte Fläche, **dadurch gekennzeichnet, dass** die modifizierte Fläche erhalten wird durch Aussetzen einer Polyvinylidenfluorid-Membran einer Wärme- und Druckbehandlung unter den die folgende Gleichung T $\geq$-0,015P+105 erfüllenden Bedingungen, worin T die Temperatur ist, die im Bereich von 30°C bis 170°C liegt, und P der Druck ist, der im Bereich von 1000 bis 5000 N/cm$^2$ liegt.

2. Das Verfahren zur Herstellung einer modifizierten Polyvinylidenfluorid-Membran nach Anspruch 1, **dadurch gekennzeichnet, dass** die gesamte Polyvinylidenfluorid-Membran einer Wärme- und Druckbehandlung unter den die folgende Gleichung T $\geq$-0,015P+105 erfüllenden Bedingungen ausgesetzt wird, worin T die Temperatur ist, die im Bereich von 30°C bis 170°C liegt, P der Druck ist, der im Bereich von 1000 bis 5000N/cm$^2$ liegt, um eine vollständig modifizierte Polyvinylidenfluorid-Membran zu erhalten.

3. Das Verfahren zur Herstellung einer modifizierten Polyvinylidenfluorid-Membran nach Anspruch 1, **dadurch gekennzeichnet, dass** ein Teil einer Polyvinylidenfluorid-Membran einer Wärme- und Druckbehandlung unter den die folgende Gleichung T $\geq$-0,015P+105 erfüllenden Bedingungen ausgesetzt wird, worin T die Temperatur ist, die im Bereich von 30°C bis 170°C liegt, P der Druck ist, der im Bereich von 1000 bis 5000 N/cm$^2$ liegt, um eine teilweise modifizierte Polyvinylidenfluorid-Membran mit wenigstens einer modifizierten Fläche und einer nicht modifizierten Fläche zu erhalten.

4. Das Verfahren zur Herstellung einer modifizierten Polyvinylidenfluorid-Membran nach einem der Ansprüche 1 bis 3, worin die Wärme- und Druckbehandlung unter Verwendung eines metallischen Formwerkzeugs durchgeführt wird.

5. Das Verfahren zur Herstellung der modifizierten Polyvinylidenfluorid-Membran nach einem der Ansprüche 1 bis 4, worin die nicht modifizierte Polyvinylidenfluorid-Membran eine Proteinbindungskapazität von nicht weniger als 0,1 $\mu$g/cm$^2$ aufweist.

6. Verwendung der modifizierten Polyvinylidenfluorid-Membran, erhältlich durch ein Verfahren nach einem der Ansprüche 1 bis 5, **dadurch gekennzeichnet, dass** die modifizierte Polyvinylidenfluorid-Membran und eine für Proteine adsorptive Membran durch Heißsiegelung miteinander laminiert werden, wobei wenigstens ein Teil einer Membran durch die andere Membran nicht bedeckt verbleibt.

7. Eine modifizierte Polyvinylidenfluorid-Membran, umfassend wenigstens eine modifizierte Fläche, die erhältlich ist durch Modifizieren einer Polyvinylidenfluorid-Membran durch eine Wärme- und Druckbehandlung unter den die folgende Gleichung T $\geq$-0,015P+105 erfüllenden Bedingungen, worin T die Temperatur ist, die im Bereich von 30°C bis 170°C liegt, P der Druck ist, der im Bereich von 1000 bis 5000N/cm$^2$ liegt, worin die modifizierte Fläche Brechungshöchstpunkte bei Brechungswinkeln (2$\theta$°) von 0,8 $\pm$ 0,2 Grad, 18,4 $\pm$ 0,2 Grad, 20,0 $\pm$ 0,2 Grad und 26,8 $\pm$ 0,2 Grad in einem Röntgen-Beugungsspektrum mit einer CuK$\alpha$-Strahlung aufweist, und die nicht modifizierte Fläche Brechungshöchstpunkte bei Brechungswinkeln (2$\theta$°) von 18,4 $\pm$ 0,2 Grad, 20,0$\pm$ 0,2 Grad und 26,8 $\pm$ 0,2 Grad in einem Röntgen-Beugungsspektrum mit einer CuK$\alpha$-Strahlung aufweist.

8. Die modifizierte Polyvinylidenfluorid-Membran nach Anspruch 7, worin die modifizierte Polyvinylidenfluorid-Membran eine vollständig modifizierte Polyvinylidenfluorid-Membran ist.

9. Die modifizierte Polyvinylidenfluorid-Membran nach Anspruch 7, worin die modifizierte Polyvinylidenfluorid-Membran eine teilweise modifizierte Polyvinylidenfluorid-Membran ist mit wenigstens einer modifizierten Fläche und einer nicht modifizierten Fläche.

10. Die modifizierte Polyvinylidenfluorid-Membran nach einem der Ansprüche 7 bis 9, worin die Wärme- und Druckbehandlung unter Verwendung eines metallischen Formwerkzeugs durchgeführt wird.

11. Die modifizierte Polyvinylidenfluorid-Membran nach einem der Ansprüche 7 bis 10, worin die nicht modifizierte Polyvinylidenfluorid-Membran eine Proteinbindungskapazität von nicht weniger als 0,1 $\mu$g/cm$^2$ aufweist.

12. Eine laminierte Membran zur Adsorption eines Proteins, **dadurch gekennzeichnet, dass** eine modifizierte Polyvinylidenfluorid-Membran nach einem der Ansprüche 7 bis 11 und eine zur Adsorption von Protein befähigte Membran durch Heißsiegelung mit einander laminiert sind und an wenigstens einem Teil einer Membran keine Beschichtung mit der anderen Membran vorliegt.

## Revendications

1. Un procédé de fabrication d'une membrane de fluorure de polyvinylidène modifiée comprenant au moins une zone modifiée, **caractérisé en ce que** la zone modifiée est obtenue en soumettant une membrane de fluorure de polyvinylidène à un traitement à chaud et sous pression dans des conditions satisfaisant l'équation suivante T $\geq$ -0.015P+105, dans laquelle T est une température de 30° C à 170° C, P est une pression de 1000 à 5000N/cm$^2$.

2. Le procédé de fabrication d'une membrane de fluorure de polyvinylidène modifiée selon la revendication 1, **caractérisé en ce que** l'intégralité de la membrane de fluorure de polyvinylidène est soumise à un traitement à chaud et sous pression dans des conditions satisfaisant l'équation suivante : T $\geq$ -0.015P+105, dans laquelle T est une température de 30° C à 170° C, P est une pression de 1000 à 5000N/cm$^2$, pour obtenir une membrane de fluorure de polyvinylidène modifiée intégralement.

3. Le procédé de fabrication d'une membrane de fluorure de polyvinylidène modifiée selon la revendication 1, **caractérisé en ce qu'**une partie de la membrane de fluorure de polyvinylidène est soumise à un traitement à chaud et sous pression dans des conditions satisfaisant l'équation suivante : T $\geq$ -0.015P+105, dans laquelle T est une température de 30° C à 170° C, P est une pression de 1000 à 5000N/cm$^2$, pour obtenir une membrane de fluorure de polyvinylidène partiellement modifiée, ayant au moins une zone modifiée et une zone non modifiée.

4. Le procédé de fabrication d'une membrane de fluorure de polyvinylidène modifiée selon l'une quelconque des revendications 1 à 3, dans lequel le traitement à chaud et sous pression est effectué en utilisant un moule métallique.

5. Le procédé de fabrication d'une membrane de fluorure de polyvinylidène modifiée selon l'une quelconque des revendications 1 à 4, dans lequel la membrane de fluorure de polyvinylidène non modifiée a une capacité de liaison protéique d'au moins 0.1 pg/cn12.

6. Utilisation d'une membrane de fluorure de polyvinylidène modifiée obtenue par le procédé selon l'une quelconque des revendications 1 à 5, **caractérisée en ce que** la membrane de fluorure de polyvinylidène modifiée et une membrane d'adsorption des protéines sont lamellées par thermoscellage, laissant au moins une partie d'une membrane non couverte par l'autre membrane.

7. Une membrane de fluorure de polyvinylidène modifiée, comprenant au moins une zone modifiée susceptible d'être obtenue en modifiant la membrane de fluorure de polyvinylidène par un traitement à chaud et sous pression dans des conditions satisfaisant l'équation suivante T $\geq$ -0.015P+105, dans laquelle T est une température de 30° C à 170° C, P est une pression de 1000 à 5000N/cm$^2$, dans laquelle la zone modifiée a des pics de diffraction à des angles de diffraction (20°) de 0.8 $\pm$ 0.2 degrés, 18.4 $\pm$ 0.2 degrés, 20.0 $\pm$ 0.2 degrés, et 26.8 $\pm$ 0.2 degrés dans le spectre de diffraction par rayons X généré par un rayon CuK-$\alpha$, et la zone non modifiée a des pics de diffraction à des angles de diffraction (20°) de 18.4 $\pm$ 0.2 degrés, 20.0 $\pm$ 0.2 degrés, et 26.8 $\pm$ 0.2 degrés dans le spectre de diffraction par rayons X généré par un rayon CuK-$\alpha$.

8. La membrane de fluorure de polyvinylidène modifiée selon la revendication 7, dans laquelle la membrane de fluorure de polyvinylidène modifiée est une membrane de fluorure de polyvinylidène modifiée intégralement.

**9.** La membrane de fluorure de polyvinylidène modifiée selon la revendication 7, dans laquelle la membrane de fluorure de polyvinylidène modifiée est une membrane de fluorure de polyvinylidène partiellement modifiée, ayant au moins une zone modifiée et une zone non modifiée.

**10.** La membrane de fluorure de polyvinylidène modifiée selon l'une quelconque des revendications 7 à 9, dans laquelle le traitement à chaud et sous pression est effectué en utilisant un moule métallique.

**11.** La membrane de fluorure de polyvinylidène modifiée selon l'une quelconque des revendications 7 à 10, dans laquelle la membrane de fluorure de polyvinylidène non modifiée a une capacité de liaison protéique d'au moins 0.1 $\mu$g/cm$^2$.

**12.** Une membrane lamellée destinée à l'adsorption d'une protéine, **caractérisée en ce qu'**une membrane de fluorure de polyvinylidène modifiée selon l'une quelconque des revendications 7 à 11, et une membrane d'adsorption des protéines, sont lamellées par thermoscellage, et au moins une partie d'une membrane n'étant pas couverte par l'autre membrane.

Figure 1

T=-0.015P+105

Temperature (°C)

Pressure (kg/cm$^2$)

Figure 2a

——Untreated

- - -Heat treatment only

Heat and pressure treatment

$\langle i(2\theta)\rangle/a.u.$

$2\theta$

Figure 2b

Figure 3

Figure 4

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0119505 A2

- WO 9820020 A

**Non-patent literature cited in the description**

- X-sen kaisetu no tebiki. Rigaku Electric Corporation, 30 December 1986